# EUROPEAN PATENT APPLICATION

(11) **EP 3 508 883 A1**
(43) Date of publication of application: **10.07.2019**
(21) Application number: 17846544.9
(22) Date of filing: 30.08.2017
(51) Int. Cl.: G01S 17/93, G01S 13/93, G08G 1/16

(54) **CONTROL DEVICE, MEASURING DEVICE, CONTROL METHOD, AND PROGRAM**

(30) Priority: 31.08.2016 JP 2016170039
(71) Applicant: Pioneer Corporation, Tokyo 113-0021 (JP)
(72) Inventor: MATSUDA Takehiro, Tokyo 112-0002 (JP); AOYAMA Hiroshi, Tokyo 112-0002 (JP); KONO Akira, Tokyo 112-0002 (JP); KUROKI Eiji, Tokyo 112-0002 (JP); FURUKAWA Junichi, Tokyo 113-0021 (JP)
(74) Representative: Vossius & Partner Patentanwälte Rechtsanwälte mbB
(86) International application number: PCT/JP2017/031103
(87) International publication number: WO 2018/043540

(57) **Abstract**

A measuring device (200) is a device disposed in a mobile body, and includes a measurement unit (202) that scans an object by emitting electromagnetic waves. The measurement unit (202) is controlled by a measurement unit control device (203) including a control unit (204). The control unit (204) sets a scanning range of the measurement unit (202) using information on a position that is a predetermined distance ahead. Specifically, the control unit (204) determines a position that is a predetermined distance ahead of the current position of the mobile body (240), on a predicted course of the mobile body (240) . Further, the control unit (204) uses information on the position that is a predetermined distance ahead to set the scanning range of the measurement unit (202).

## Description

### TECHNICAL FIELD

The present invention relates to a control device, a measuring device, a control method, and a program.

### BACKGROUND ART

Techniques for detecting obstacles or the like by emitting electromagnetic waves to scan objects have been developed. For example, Patent Document 1 below discloses a technique in which an apparatus installed in an automobile or the like performs scanning within a target area by irradiating the target area with a laser beam to detect an obstacle or the like. Patent Document 1 discloses a technique for changing the central axis of a scan area in the lateral direction according to the steering angle of the automobile.

### RELATED DOCUMENT

### PATENT DOCUMENT

[Patent Document 1] Japanese Laid-open Patent Publication No. 2006-258604

### SUMMARY OF THE INVENTION

### TECHNICAL PROBLEM

However, according to the technique disclosed in Patent Document 1, since the scan area is changed after the actual operation of the steering unit of the automobile, the change operation of the scan area may not be made in time, possibly causing setting of a scan area that is deviated from the desired scan area. This problem becomes more prominent as the moving speed of the automobile becomes higher.

The present invention has been made in view of the above problems, and an object of the present invention is to provide a technique for suppressing, in a case of dynamically changing a scan area of a measuring device, a deviation of the changed scan area from a desired scan area.

### SOLUTION TO PROBLEM

The invention described in claim 1 is a control device including
a control unit that controls a measurement unit which performs scanning by emitting electromagnetic waves and is disposed in a mobile body,
in which the control unit sets a scanning range of the measurement unit, based on information indicating a current position of the mobile body and information indicating a predicted course of the mobile body.

The invention described in claim 8 is a measuring device which is disposed in a mobile body, the measuring device including
a measurement unit that performs scanning by emitting electromagnetic waves; and
a control unit that controls the measurement unit,
in which the control unit sets a scanning range of the measurement unit, based on information indicating a current position of the mobile body and information indicating a predicted course of the mobile body.

The invention described in claim 9 is a control method executed by a computer of controlling a measuring device which scans an object by emitting electromagnetic waves and is disposed in a mobile body,
the method including setting a scanning range of the measuring device, based on information indicating a current position of the mobile body and information indicating a predicted course of the mobile body.

The invention described in claim 10 is a program causing a computer to execute the control method according to claim 9.

### BRIEF DESCRIPTION OF THE DRAWINGS

The foregoing and other objects, features and advantages will become more apparent from the following description of preferred exemplary embodiments and the accompanying drawings.

Fig. 1 is a block diagram illustrating a functional configuration of a measuring device according to a first embodiment.
Fig. 2 is a flowchart illustrating a flow of a process performed by the measuring device of the first embodiment.
Fig. 3 is a diagram illustrating a hardware configuration of a control unit.
Fig. 4 is a diagram illustrating a hardware configuration of a measurement unit.
Fig. 5 is a diagram illustrating a hardware configuration of the measurement unit that emits light.
Fig. 6 is a diagram illustrating the measuring device installed in a mobile body.
Fig. 7 is a flowchart showing the flow of a process of a first specific example of the first embodiment.
Fig. 8 is a diagram for specifically explaining the flow of the process shown in the flowchart of Fig. 7.
Fig. 9 is a diagram for specifically explaining the flow of the process shown in the flowchart of Fig. 7.
Fig. 10 is a diagram for specifically explaining the flow of the process shown in the flowchart of Fig. 7.
Fig. 11 is a flowchart showing the flow of a process of a second specific example of the first embodiment.
Fig. 12 is a diagram for specifically explaining the flow of the process shown in the flowchart of Fig. 11.
Fig. 13 is a diagram for specifically explaining the flow of the process shown in the flowchart of Fig. 11.
Figs. 14 are diagrams for explaining a process of controlling a scanning range of the measurement unit in a longitudinal direction using information on a road gradient.
Fig. 15 is a flowchart illustrating an example of a flow of a process performed by a measuring device of a second embodiment.
Fig. 16 is a flowchart illustrating another example of a flow of a process performed by the measuring device of the second embodiment.

### DESCRIPTION OF EMBODIMENTS

Hereinafter, embodiments of the present invention will be described with reference to the drawings. In all the drawings, the same constituent elements are denoted by the same reference numerals, and the description thereof will not be repeated as appropriate.

### [First Embodiment]

### <Functional Configuration of Measuring Device>

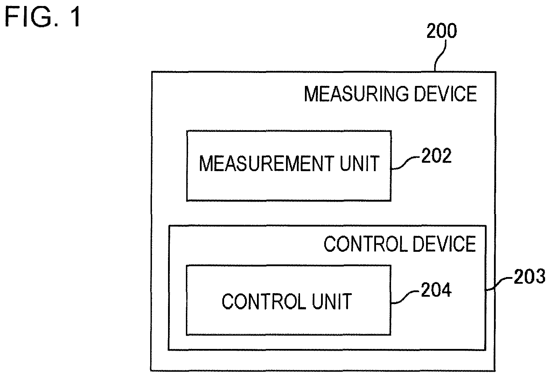

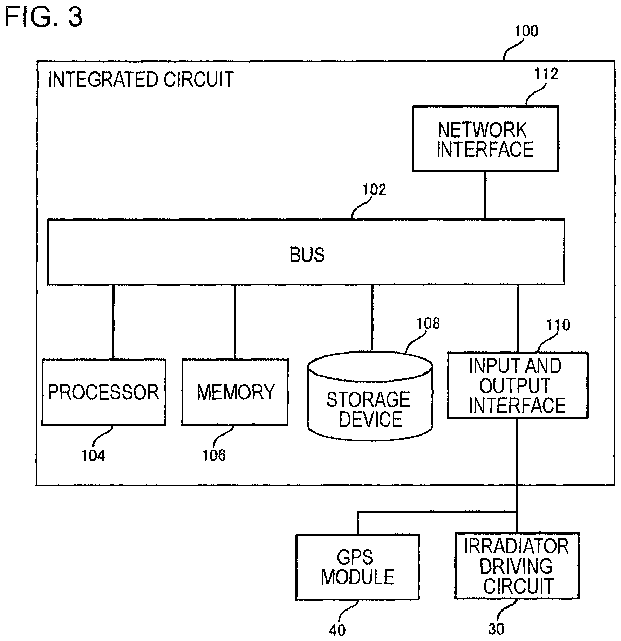

Fig. 1 is a block diagram illustrating a functional configuration of a measuring device 200 according to a first embodiment. In Fig. 1, each block represents a functional unit configuration, instead of a hardware unit configuration. The hardware configuration of the measuring device 200 will be described later with reference to Fig. 3 to Fig. 5.

The measuring device 200 is disposed in a mobile body 240, and includes a measurement unit 202. The measurement unit 202 scans an object by emitting electromagnetic waves. Here, the measurement unit 202 can scan an object while changing the irradiation direction of the electromagnetic waves in two dimensions of the longitudinal direction and the lateral direction. Note that the longitudinal direction means a substantially vertical direction and the lateral direction means a substantially horizontal direction.

In the example of Fig. 1, the measuring device 200 is configured to include a measurement unit control device 203. The measurement unit control device 203 includes a control unit 204 that controls the measurement unit 202. Specifically, the control unit 204 sets a scanning range of the measurement unit 202, based on information indicating a current position of the mobile body 240 (current position information) and information indicating a predicted course of the mobile body 240. Here, "setting a scanning range of the measurement unit 202" means controlling the operation of an electromagnetic wave irradiation mechanism (not shown) provided in the measurement unit 202 such that a desired area can be irradiated with the electromagnetic waves outputted from the measurement unit 202. Specifically, it means that the control unit 204 generates a control signal for controlling the operation of the electromagnetic wave irradiation mechanism of the measurement unit 202, and transmits the control signal to the measurement unit 202. The electromagnetic wave irradiation mechanism is, for example, a mechanism that reflects electromagnetic waves and changes its direction (for example, a mirror) or a mechanism that rotates in the height direction and the lateral direction (for example, an actuator), as described later. The detailed operation of the control unit 204 will be described later.

In addition to the example of Fig. 1, the measuring device 200 and the measurement unit control device 203 may be provided as separate devices. In a case where the measuring device 200 and measurement unit control device 203 are provided as separate devices, the devices are allowed communication by wired or wireless connection. Further, in this case, the measurement unit control device 203 may be incorporated or disposed in the mobile body 240 or disposed in the mobile body 240 or may be disposed in a place away from the mobile body 240 such as in a server, for example. In the latter case, the control unit 204 communicates with a communication unit provided in the mobile body 240 through a 3G line, a long term evolution (LTE) line, or the like, for example, and acquires the current position information the mobile body 240 which is measured by the position measurement unit (for example, a GPS module) provided in the mobile body 240. Then, the control unit 204 executes processes as described later in detail by using the current position information of the mobile body 240 acquired from the mobile body 240. Then, the control unit 204 notifies the measurement unit 202 of the scanning range of the measurement unit 202 obtained as a result of the process, through the 3G line, the LTE line, or the like, for example.

As described above, the measuring device 200 of the present embodiment is able to determine the scanning range of the measurement unit 202 to be set, by using the predicted course of the mobile body 240 and the current position of the mobile body 240, before the steering signal is generated by operation of the steering unit of the mobile body 240. That is, it is possible to achieve a state in which the scanning range of the measurement unit 202 may be changed at a stage before the operation of the steering unit of the mobile body 240. Therefore, it is possible to suppress an occurrence of a problem that the changing operation of the measurement unit 202 cannot be made in time, causing a deviation of the changed scanning range of the measurement unit 202 from a desired area.

Hereinafter, the measuring device 200 of the present embodiment will be described in more detail.

### <Process Flow>

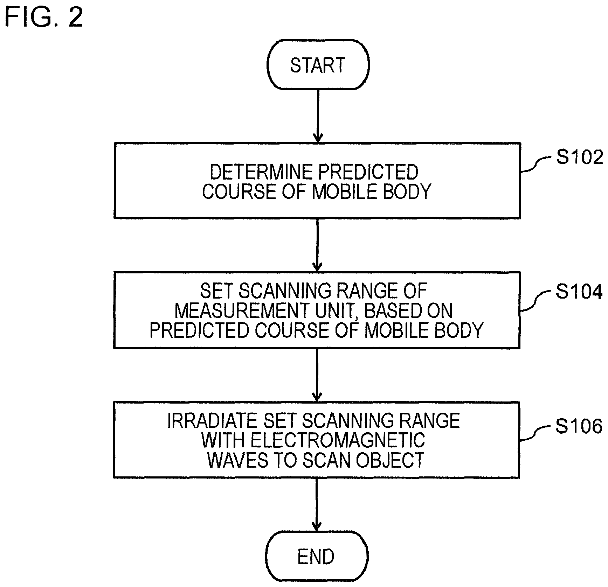

Fig. 2 is a flowchart illustrating a flow of a process performed by the measuring device 200 of the first embodiment. The control unit 204 determines the predicted course of the mobile body 240 (S102) . For example, the control unit 204 can determine the predicted course of the mobile body 240 by using information indicating the current position of the mobile body 240 and information set in advance as a route along which the mobile body 240 is to move (set route information) . As will be described in detail later, the control unit 204 can determine the predicted course of the mobile body 240, by using the information indicating the current position of the mobile body 240, the traveling direction of the mobile body 240, and the map data of locations around the current position of the mobile body 240. Moreover, the control unit 204 can determine the moving direction of the mobile body 240, for example, based on a change in the position of the mobile body 240. Then, the control unit 204 sets the scanning range of the measurement unit 202, based on the predicted course of the mobile body 240 (S104). The measurement unit 202 irradiates the scanning range set by the control unit 204 with electromagnetic waves to scan an object (S106).

### <Example of Hardware Configuration of Measuring Device 200>

Respective functional configuration units of the measuring device 200 and the measurement unit control device 203 may be implemented by hardware (for example, a hard-wired electronic circuit) that implements each functional configuration unit, or a combination of hardware and software (for example, a combination of an electronic circuit, a program for controlling the electronic circuit, and the like). Hereinafter, the case where respective functional configuration units of the measuring device 200 and the measurement unit control device 203 are implemented by a combination of hardware and software will be further described.

### <<Hardware Configuration Example of Control Unit 204>>

Fig. 3 is a diagram illustrating a hardware configuration of the control unit 204. An integrated circuit 100 implements the control unit 204. For example, the integrated circuit 100 is a system on chip (SoC).

The integrated circuit 100 includes a bus 102, a processor 104, a memory 106, a storage device 108, an input and output interface 110, and a network interface 112. The bus 102 is a data transmission path through which the processor 104, the memory 106, the storage device 108, the input and output interface 110, and the network interface 112 mutually transmit and receive data. However, a method of connecting the processor 104 and the like to each other is not limited to bus connection. The processor 104 is an arithmetic processing unit implemented by using a microprocessor or the like. The memory 106 is implemented by using a random access memory (RAM) or the like. The storage device 108 is implemented by using a read only memory (ROM), a flash memory, or the like.

The input and output interface 110 connects the integrated circuit 100 to peripheral devices. In Fig. 3, an irradiator driving circuit 30 is connected to the input and output interface 110. The irradiator driving circuit 30 will be described later. A GPS module 40 for acquiring current position information of the mobile body 240 is connected to the input and output interface 110. Note that it is also possible to acquire the position information of the surrounding base stations through the network interface 112 and to determine the current position information of the mobile body 240 using the position information of the surrounding base stations. In this case, the GPS module 40 need not be connected to the input and output interface 110. Further, in a case where the control unit 204 is implemented by a device disposed at a location away from the mobile body 240, for example, in a server, the GPS module 40 is connected through the network interface 112 instead of the input and output interface 110.

The network interface 112 connects the integrated circuit 100 to a communication network. This communication network is, for example, a controller area network (CAN) communication network or the like. Note that the method by which the network interface 112 connects to the communication network may be a wireless connection or a wired connection.

The storage device 108 stores program modules for realizing functions of the control unit 204. The processor 104 implements the functions of the control unit 204 by reading the program module into the memory 106 and executing it.

The hardware configuration of the integrated circuit 100 is not limited to the configuration illustrated in Fig. 3. For example, the program module may be stored in the memory 106. In this case, the integrated circuit 100 need not include the storage device 108.

### <<Hardware Configuration Example of Measurement Unit 202>>

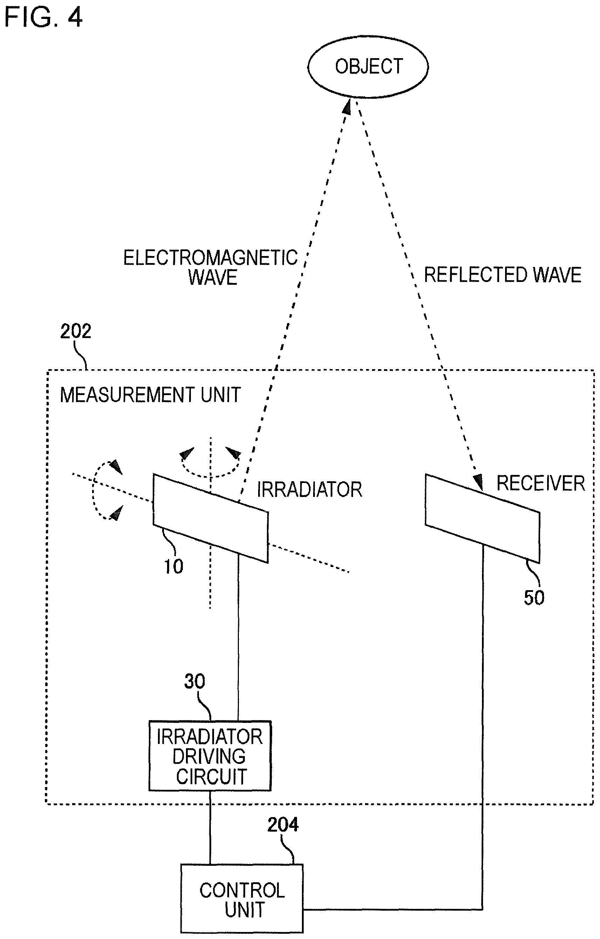

Fig. 4 is a diagram illustrating a hardware configuration of the measurement unit 202. The measurement unit 202 includes an irradiator 10, an irradiator driving circuit 30, and a receiver 50. The irradiator 10 emits electromagnetic waves to be used for scanning. Here, the irradiator 10 has a configuration in which the irradiation direction is variable, and can emit electromagnetic waves in various directions. The irradiator driving circuit 30 is a circuit for driving the irradiator 10. The receiver 50 receives the reflected wave of the electromagnetic waves emitted to the outside of the measuring device 200.

The control unit 204 detects that the reflected wave has been received by the receiver 50. For example, the receiver 50 is configured to transmit a predetermined signal to the control unit 204 in response to reception of the reflected wave. By receiving this signal, the control unit 204 detects that the reflected wave has been received by the receiver 50.

The electromagnetic waves emitted by the irradiator 10 may be light such as laser beams or radio waves such as millimeter waves. Hereinafter, the hardware configuration of the measurement unit 202 in the case where the irradiator 10 emits light will be illustrated. The same configuration can also be adopted for the measurement unit 202 in a case where the irradiator 10 emits electromagnetic waves.

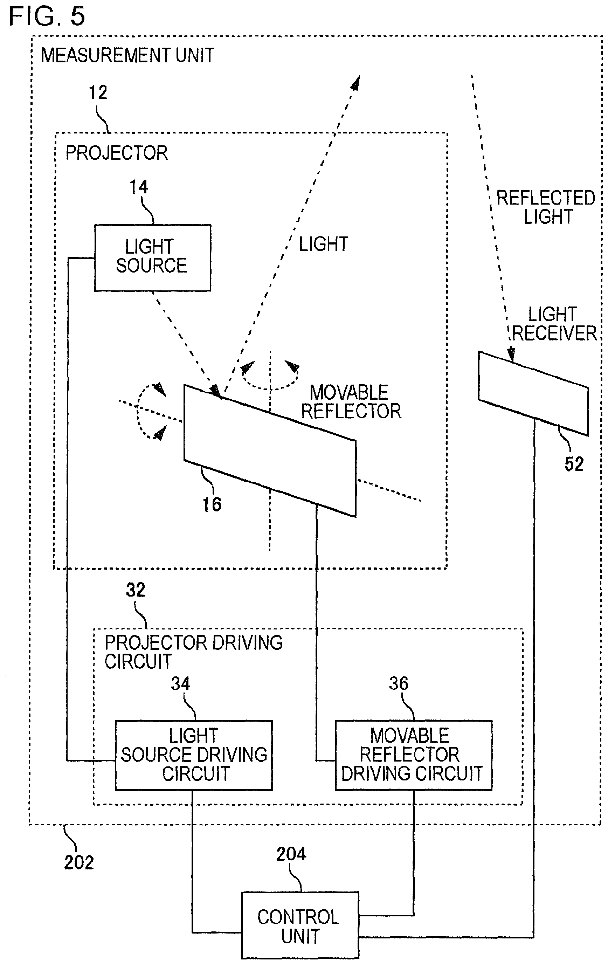

Fig. 5 is a diagram illustrating a hardware configuration of the measurement unit 202 that emits light. A projector 12 and a projector driving circuit 32 in Fig. 5 are examples of the irradiator 10 and the irradiator driving circuit 30 in Fig. 4, respectively. The projector 12 includes a light source 14 and a movable reflector 16. The projector driving circuit 32 includes a light source driving circuit 34 and a movable reflector driving circuit 36.

The light source 14 is any light source that emits light. The light source driving circuit 34 drives the light source 14 by controlling the supply of electric power to the light source 14. The light emitted by the light source 14 is, for example, a laser beam. In this case, for example, the light source 14 is a semiconductor laser that emits a laser beam.

The movable reflector 16 reflects the light emitted from the light source 14. The light reflected by the movable reflector 16 is emitted to the outside of the measuring device 200. The movable reflector driving circuit 36 drives the movable reflector 16. For example, the movable reflector 16 has one mirror configured to be rotatable at least in two directions (two axes), that is, the height direction and the lateral direction. The mirror is, for example, a micro electro mechanical system (MEMS) mirror. The movable reflector 16 may be configured to allow scanning in two directions by, for example, a MEMS mirror allowing scanning in one direction and a motor allowing scanning in the vertical direction.

The configuration of the movable reflector 16 is not limited to the configuration shown in Fig. 5. For example, the movable reflector 16 may be configured with two mirrors whose rotation axes cross each other.

In Fig. 5, the measurement unit 202 includes a light receiver 52. The light receiver 52 is an example of the receiver 50 in Fig. 4. The light receiver 52 receives the reflected light of the light emitted to the outside of the measuring device 200. For example, the light receiver 52 has an avalanche photodiode (APD).

Note that the configuration of the measurement unit 202 is not limited to those shown in Figs. 4 and 5. For example, in Fig. 5, the measurement unit 202 is configured to be able to emit light in various directions, by reflecting the light emitted from the light source 14 by the movable reflector 16. However, the configuration for emitting light in various directions is not limited to the configuration shown in Fig. 5. For example, the light source 14 itself may include a mechanism that rotates in the height direction and the lateral direction. In this case, the measurement unit 202 can emit light in various directions by controlling the attitude of the light source 14. In this case, the measurement unit 202 need not include the movable reflector 16 and the movable reflector driving circuit 36. In this case, the light source driving circuit 34 controls the attitude of the light source 14 in addition to the light emission by the light source 14.

Note that the for implementing the control unit 204 (see Fig. 3) and the hardware for implementing the measurement unit 202 (see Figs. 4 and 5) may be packaged in one housing, or may be packaged in separate housings.

### <Installation Example of Measuring Device 200>

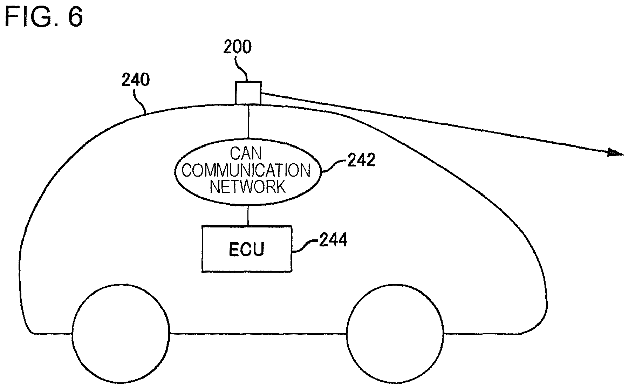

The measuring device 200 is installed in a mobile body such as an automobile or a train, for example. Fig. 6 is a diagram illustrating the measuring device 200 installed in the mobile body 240. In Fig. 6, the measuring device 200 is fixed to the upper part of the mobile body 240. Further, the measuring device 200 is connected to the control device 244 through a CAN communication network 242. The control device 244 controls the mobile body 240. For example, the control device 244 is an electronic control unit (ECU) .

Here, the control unit 204 may be implemented as a part of the control device 244 which controls the mobile body 240. In this case, a program module for implementing the above-described control unit 204 is stored in the storage device of the control device 244.

Note that the installation location of the measuring device 200 is not limited to the upper part of the mobile body 240. For example, the measuring device 200 may be installed inside the mobile body 240 (for example, the interior), or may be installed on the front surface of the mobile body 240 (for example, around the bumper). Further, a plurality of measuring devices 200 may be installed in the mobile body 240.

### (First Specific Example)

In a first specific example, the control unit 204 uses set route information which is set in advance as a route to be traveled by the mobile body 240, as information indicating the predicted course of the mobile body 240. The control unit 204 uses the set route information and the information on the current position of the mobile body 240 to determine a position that is a predetermined distance ahead of the current position of the mobile body 240 on the predicted course of the mobile body 240.

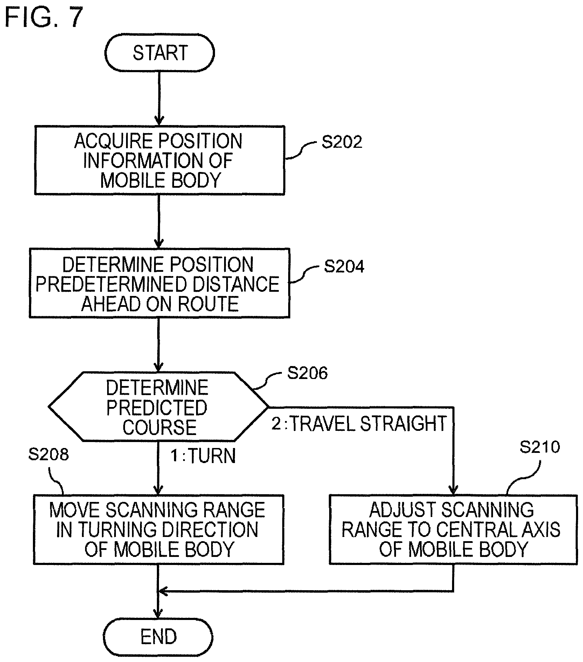

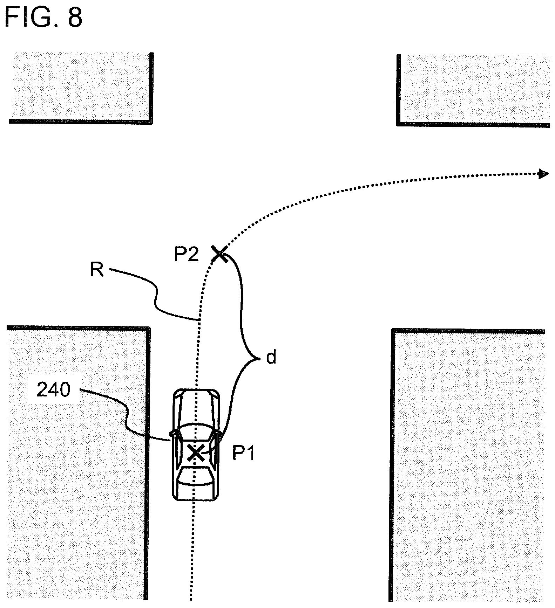

The first specific example of the first embodiment will be described with reference to Figs. 7 to 10. Fig. 7 is a flowchart showing the flow of the process of the first specific example of the first embodiment. Figs. 8 to 10 are diagrams for specifically explaining the flow of the process shown in the flowchart of Fig. 7.

The control unit 204 acquires the current position information of the mobile body 240 (S202) . The current position information of the mobile body 240 is measured by the GPS module 40 at a predetermined interval, for example. The control unit 204 acquires the current position information of the mobile body 240 thus measured from the GPS module 40. The position P1 in Fig. 8 corresponds to the current position of the mobile body 240.

Next, the control unit 204 determines a position that is a predetermined distance ahead of the current position of the mobile body 240 on the route indicated by the set route information (S204) . Specifically, the control unit 204 operates as follows. First, the control unit 204 acquires set route information. Without being particularly limited, the set route information may be, for example, information indicating a travel route from a departure to a destination, provided in a navigation function, or information indicating a traveling position of the mobile body 240 on the road, used in an automatic driving function. The control unit 204 can acquire set route information, through the network interface 112, from, for example, a built-in type navigation apparatus mounted on the mobile body 240, an external type navigation apparatus disposed on the dashboard of the mobile body 240, or a navigation application activated on a mobile terminal such as a smartphone. The set route information is stored in the storage device 108 or the like, and the control unit 204 may be configured to read the set route information from the storage device 108. On the route indicated by the read set route information, the control unit 204 sets the position corresponding to the current position information of the mobile body 240 acquired in S202 as the point of origin, and determines the position that is a predetermined distance ahead thereof from the point of origin. In the example of Fig. 8, the control unit 204 determines the position P2 that is ahead of the current position P1 of the mobile body 240 by a predetermined distance d on the route R. Note that the predetermined distance d may be a linear distance between two points (between P1 and P2 in Fig. 8). The predetermined distance d is defined, for example, in a program module for implementing the function of the control unit 204.

Here, in a case where the predetermined distance d is fixed, the faster the speed of the mobile body 240 is, the shorter the time required for the mobile body 240 to reach the position ahead by the predetermined distance d. Thus, the control unit 204 may be configured to change the predetermined distance d according to the speed of the mobile body 240. Specifically, the control unit 204 is configured to use a longer predetermined distance d as the moving speed of the mobile body 240 is higher. For example, a plurality of predetermined distances may be defined in the form of a table in association with threshold values related to speed. In this case, the control unit 204 can compare the speed of the mobile body 240 with the threshold values related to speed in the table, and can determine the predetermined distance corresponding to the speed of the mobile body 240. For example, the predetermined distance may be defined so as to have a larger value as the speed increases, by a function using the speed of the mobile body 240 as a parameter. In this case, the control unit 204 can compute a predetermined distance by substituting, for example, the speed information of the mobile body 240 that can be acquired through the CAN communication network 242 as a function parameter.

By increasing the predetermined distance according to the speed of the mobile body 240, it is possible to sufficiently secure the time for moving the scanning range of the measurement unit 202 even when the mobile body 240 has a high speed. Thus, it is possible to highly accurately suppress an occurrence of a problem that the operation of changing the scanning range of the measurement unit 202 cannot be made in time and the changed scanning range of the measurement unit 202 deviates from a desired area.

Next, the control unit 204 determines the predicted course of the mobile body 240 (S206). Specifically, the control unit 204 determines whether the mobile body 240 travels straight or turns at or in the vicinity of the position determined in S204. Although not particularly limited, the control unit 204 can determine the predicted course of the mobile body 240 at the position determined in S204 or in the vicinity of the position, based on the trajectory of the route indicated by the set route information, for example. According to the route R in the example of Fig. 8, it can be seen that the mobile body 240 is scheduled to turn to the right at the intersection ahead (at the position P2). Based on the position P2 determined on the route R, the control unit 204 determines that the mobile body 240 turns to the right at a position a predetermined distance d ahead of the current position. In addition to the example of Fig. 8, in a case where the set route information manages the route R in units of blocks obtained by dividing the route at predetermined distances, the control unit 204 can determine the predicted course of the mobile body 240 in accordance with whether the route in the next block of the block corresponding to the current position of the mobile body 240 is straight or curved in any direction.

In a case of determining that the mobile body 240 turns in a certain direction (S206-1), the control unit 204 moves the scanning range of the measurement unit 202 in the turning direction of the mobile body 240 (the right direction in the example of Fig. 8) (S208) .

For example, in a case where the movable reflector 16 in Fig. 5 is a MEMS mirror, the angle of the MEMS mirror is determined by the voltage applied to the piezoelectric actuator (not shown) of the MEMS mirror. Here, the control unit 204 controls the driving circuit 36 of the movable reflector so as to apply, for example, a voltage whose value fluctuates periodically (for example, a sine wave or the like) to the piezoelectric actuator of the MEMS mirror (the movable reflector 16). Light emitted from the light source 14 travels via the MEMS mirror. Therefore, the irradiation direction of light from the light source 14 is determined in accordance with the angle of the MEMS mirror. That is, by causing the light source 14 to emit light at a timing at which the angle of the MEMS mirror corresponds to the intended direction, the measuring device 200 can scan the desired region. Accordingly, the control unit 204 controls the light source driving circuit 34 so as to cause the light source 14 to emit light when the voltage value reaches a value corresponding to the target angle. As another example, if an angle sensor is integrated in the MEMS mirror, the angle of the mirror can be detected by the angle sensor. In this case, the control unit 204 can acquire the angle of the MEMS mirror from the angle sensor and control the light source driving circuit 34 so as to cause the light source 14 to emit light at a desired timing.

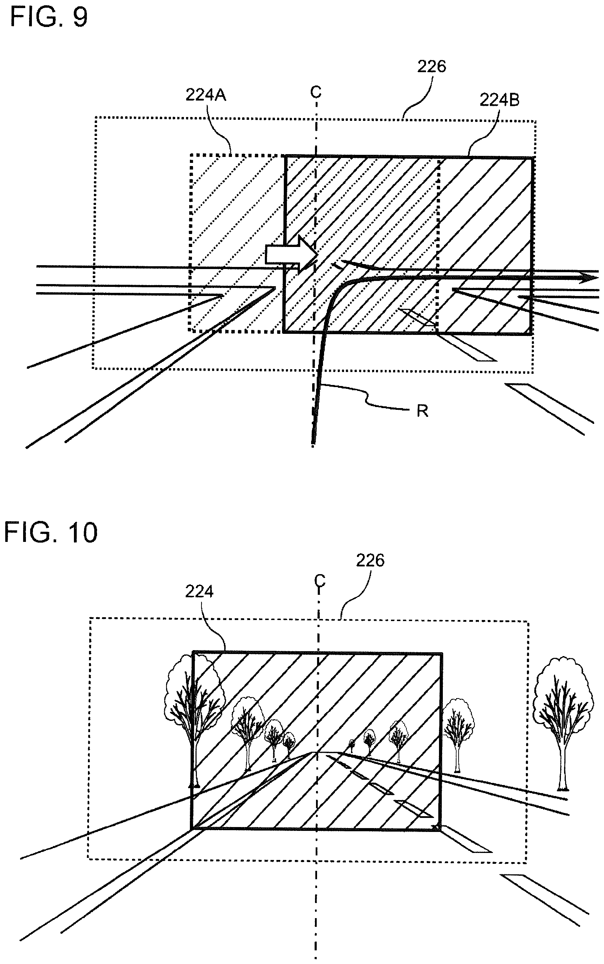

The process in S208 will be described in more detail with reference to Fig. 9. In Fig. 9, the state shown in Fig. 8 is stereoscopically expressed from the viewpoint from the mobile body 240. The dot-dashed line in Fig. 9 shows the center axis C of the mobile body 240. It is assumed in the example of Fig. 9 that before the mobile body 240 reaches the position P1 in Fig. 8, the control unit 204 sets the range 224A based on the center axis C of the mobile body 240 as the scanning range of the measurement unit 202. Thereafter, in a case where the mobile body 240 reaches the position P1, the control unit 204 sets the range 224B shifted to the right with respect to the center axis C as the scanning range of the measurement unit 202. Note that the control unit 204 can set the scanning range 224 within the irradiation range 226 of the irradiator 10. The irradiation range 226 of the irradiator 10 is determined by the physical feature of the movable part of the irradiator 10.

Here, the control unit 204 can determine the movement width of the scanning range of the measurement unit 202 according to the curvature of the curve, for example. Specifically, the control unit 204 increases the movement width of the scanning range of the measurement unit 202 as the curvature of the curve is larger (that is, as the curve is shaper). For example, the control unit 204 can compute the curvature of the curve from the trajectory of the route R indicated by the set route information. Further, in a case where information indicating the curvature of the curve portion is embedded in advance in the set route information, the control unit 204 may acquire the information on the curvature embedded in the set route information. Then, the control unit 204 computes the movement width of the scanning range 224 by, for example, a function using the curvature as a parameter, and sets the scanning range of the measurement unit 202 according to the movement width.

Returning to Fig. 7, in a case where the control unit 204 determines that the mobile body 240 travels straight (S206-2), the control unit 204 adjusts the scanning range of the measurement unit 202 to the central axis of the mobile body 240 (S210). The control unit 204 can control the irradiation range (scanning range) of electromagnetic waves by controlling the movable reflector 16 of the measurement unit 202, as in the case of moving the scanning range in S208. Specifically, as illustrated in Fig. 10, the scanning range 224 is set in accordance with the central axis C of the mobile body 240.

The mobile body 240 will highly likely follow the route indicated by the set route information. Therefore, by using the current position information of the mobile body 240 and the set route information of the mobile body 240 in combination, it is possible to predict the future course of the mobile body 240 with high accuracy. Thus, the control unit 204 can set the scanning range of the measurement unit 202 at a stage before the steering unit of the mobile body 240 is operated.

### (Second Specific Example)

In the second specific example, the control unit 204 determines a predicted course of the mobile body 240 and a position that is a predetermined distance ahead of the current position of the mobile body 240 in the predicted course, by using the information on the current position of the mobile body 240, the information indicating the moving direction of the mobile body 240, and the map data around the current position of the mobile body 240.

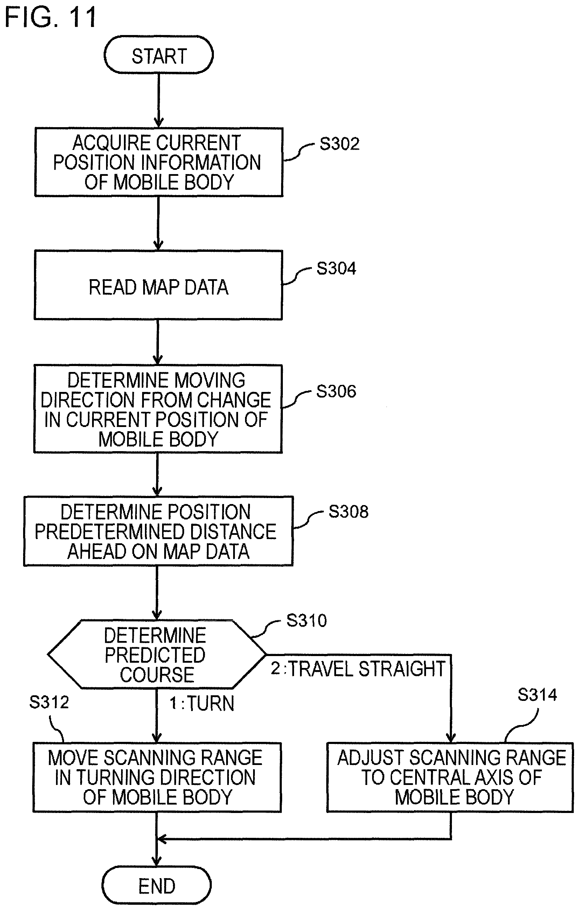

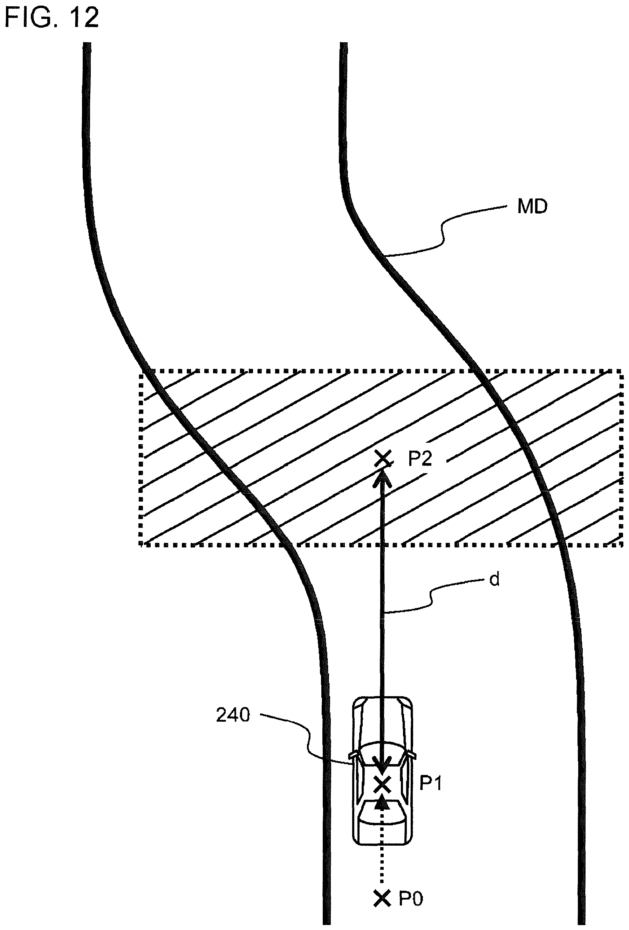

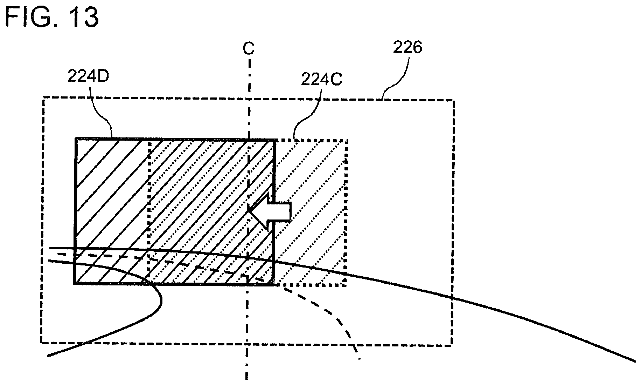

A second specific example of the first embodiment will be described with reference to Figs. 11 to 13. Fig. 11 is a flowchart showing the flow of the process of the second specific example of the first embodiment. Figs. 12 and 13 are diagrams for specifically explaining the flow of the process shown in the flowchart of Fig. 11.

The control unit 204 acquires current position information of the mobile body 240 (S302) . The current position information of the mobile body 240 is measured by the GPS module 40 at a predetermined interval, for example. The control unit 204 acquires the current position information of the mobile body 240 thus measured from the GPS module 40. Further, the control unit 204 reads map data MD (S304) . The map data MD includes at least information on the road (road information) on which the mobile body 240 can travel. The road information includes, for example, information on the positions of the start and end points of the road corresponding to the road information, the curvature of the road, the undulation (gradient) of the road, the position of the white line, and the position of a curbstone. The control unit 204 can acquire map data, through the network interface 112, from, for example, a built-in type navigation apparatus mounted on the mobile body 240, an external type navigation apparatus disposed on the dashboard of the mobile body 240, or a navigation application activated on a mobile terminal such as a smartphone. The map data is stored in the storage device 108 or the like, and the control unit 204 may be configured to read the map data from the storage device 108.

Next, the control unit 204 determines the moving direction of the mobile body 240 from the change in the current position of the mobile body 240 (S304). In the example of Fig. 12, the position P1 indicates the current position of the mobile body 240, and the position P0 indicates a past position of the mobile body 240. For example, the control unit 204 determines the direction from the position P0 to the position P1 (the direction indicated by the dotted line arrow in Fig. 12) as the moving direction of the mobile body 240.

Next, the control unit 204 determines a position that is a predetermined distance ahead of the current position of the mobile body 240 on the map data MD (S308). Specifically, the control unit 204 operates as follows. First, the control unit 204 determines the position corresponding to the current position of the mobile body 240 acquired in S302 on the map data MD. Then, the control unit 204 determines, with the position determined on the map data MD as the point of origin, a position a predetermined distance d ahead of the determined position in the direction determined in S306. In the example of Fig. 12, the position P2 is the position that is a predetermined distance ahead of the current position of the mobile body 240. The predetermined distance d is defined, for example, in a program module for implementing the function of the control unit 204.

Here, in a case where the predetermined distance d is fixed, the faster the speed of the mobile body 240 is, the shorter the time required for the mobile body 240 to reach the position the predetermined distance d ahead. Thus, the control unit 204 may be configured to change the predetermined distance d according to the speed of the mobile body 240. Specifically, the control unit 204 is configured to use a longer predetermined distance d as the moving speed of the mobile body 240 is higher. For example, a plurality of predetermined distances may be defined in the form of a table in association with threshold values related to speed. In this case, the control unit 204 can compare the speed of the mobile body 240 with the threshold values related to speed in the table, and can determine the predetermined distance corresponding to the speed of the mobile body 240. For example, the predetermined distance may be defined so as to have a larger value as the speed increases, by a function using the speed of the mobile body 240 as a parameter. In this case, the control unit 204 can compute a predetermined distance by substituting, for example, the speed information of the mobile body 240 that can be acquired through the CAN communication network 242 as a function parameter.

By increasing the predetermined distance according to the speed of the mobile body 240, it is possible to sufficiently secure the time for moving the scanning range of the measurement unit 202 even when the mobile body 240 has a high speed. Thus, it is possible to highly accurately suppress an occurrence of a problem that the changing operation of the measurement unit 202 cannot be made in time and the changed scanning range of the measurement unit 202 deviates from a desired area.

Next, the control unit 204 determines the predicted course of the mobile body 240 (S310). Specifically, the control unit 204 acquires the road information corresponding to the position determined in S308 from the map data MD. The control unit 204 can determine the shape of the road at the determined position, by using information such as the positions of the start and end points of the road, the curvature of the road, or the position of the white line, included in the road information. In the example of Fig. 12, the road corresponding to the position P2 is a hatched portion, and the control unit 204 can determine, from the road information corresponding to the road in the hatched portion, that the road corresponding to the position P2 of the mobile body 240 curves to the left. The control unit 204 determines that the mobile body 240 will turn to the left at a position a predetermined distance d ahead of the current position along the road, according to the determination result. Although not represented in Fig. 12, in a case where a road corresponding to a position that is a predetermined distance ahead of the current position of the mobile body 240 has two or more branches, for example, the control unit 204 obtains information indicating the state of the direction indicator through the CAN communication network 242, and is able to determine the predicted course of the mobile body 240. The direction indicator is usually operated before operating the steering unit. Therefore, by using the information of the direction indicator and the map data, the course of the mobile body 240 can be predicted earlier than the reception of the steering signal.

In a case of determining that the mobile body 240 turns in a certain direction (S310-1), the control unit 204 moves the scanning range of the measurement unit 202 in the direction in which the mobile body 240 turns (the left direction in the example of Fig. 12) (S312) .

For example, in a case where the movable reflector 16 in Fig. 5 is a MEMS mirror, the angle of the MEMS mirror is determined by the voltage applied to the piezoelectric actuator (not shown) of the MEMS mirror. Here, the control unit 204 controls the driving circuit 36 of the movable reflector so as to apply a voltage whose value fluctuates periodically (for example, a sine wave or the like) to the piezoelectric actuator of the MEMS mirror (the movable reflector 16). Light emitted from the light source 14 travels via the MEMS mirror. Therefore, the irradiation direction of light from the light source 14 is determined in accordance with the angle of the MEMS mirror. That is, by causing the light source 14 to emit light at a timing at which the angle of the MEMS mirror corresponds to the intended direction, the measuring device 200 can scan the desired region. Therefore, the control unit 204 controls the light source driving circuit 34 so as to cause the light source 14 to emit light when the voltage value reaches a value corresponding to the target angle. As another example, an angle sensor is integrated in the MEMS mirror, and the control unit 204 can acquire the angle of the MEMS mirror from the angle sensor, and control the light source driving circuit 34 so as to cause the light source 14 to emit light at a desired timing.

The process of S312 will be described in more detail with reference to Fig. 13. In Fig. 13, the state shown in Fig. 12 is stereoscopically expressed from the viewpoint from the mobile body 240. The dot-dashed line in Fig. 13 shows the center axis C of the mobile body 240. It is assumed that in the example of Fig. 13, before the mobile body 240 reaches the position P1 in Fig. 12, the control unit 204 sets the range 224C based on the center axis C of the mobile body 240 as the scanning range of the measurement unit 202. Thereafter, in a case where the mobile body 240 reaches the position P1, the control unit 204 sets the range 224D shifted to the left with respect to the center axis C as the scanning range of the measurement unit 202. Note that the control unit 204 can set the scanning range 224 within the irradiation range 226 of the irradiator 10. The irradiation range 226 of the irradiator 10 is determined by the physical feature of the movable part of the irradiator 10.

Here, the control unit 204 can determine the movement width of the scanning range of the measurement unit 202 according to the curvature of the curve, for example. Specifically, the control unit 204 increases the movement width of the scanning range of the measurement unit 202 as the curvature of the curve is larger (that is, as the curve is sharper). The control unit 204 acquires the curvature included in the road information, for example. Then, the control unit 204 computes the movement width of the scanning range 224 by, for example, a function using the curvature as a parameter, and sets the scanning range of the measurement unit 202 according to the movement width.

Returning to Fig. 11, in a case where the control unit 204 determines that the mobile body 240 travels straight (S310-2), the control unit 204 adjusts the scanning range of the measurement unit 202 to the central axis of the mobile body 240 (S314). The control unit 204 can control the irradiation range (scanning range) of electromagnetic waves by controlling the movable reflector 16 of the measurement unit 202, as in the case of moving the scanning range in S312. In this case, as illustrated in Fig. 10, the scanning range 224 is set in accordance with the central axis C of the mobile body 240.

By determining the shape (straight, curve, intersection, or the like) of the road a predetermined distance ahead of the mobile body 240 by using the road information included in the map data and the information on the current position of the mobile body 240, it is possible to predict the future course of the mobile body 240 with high accuracy. Thus, the control unit 204 can set the scanning range of the measurement unit 202 at a stage before the steering unit of the mobile body 240 is operated.

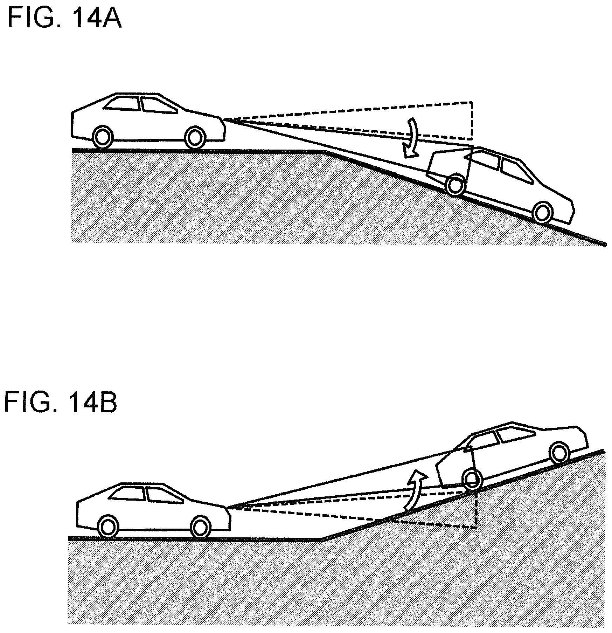

Note that, in each of the specific examples described above, the example in which the scanning range of the measurement unit 202 is controlled in the lateral direction is shown, but the control unit 204 may further be configured to control the scanning direction of the measurement unit 202 in the longitudinal direction. For example, in the case where the set route information or the road information included in the map data includes the information on the road gradient, the movement in the longitudinal direction can be controlled using the information. This will be described with reference to Figs. 14. Figs. 14 are diagrams for explaining a process of controlling the scanning range of the measurement unit 202 in the longitudinal direction, using information on a road gradient.

In Fig. 14 (a), the case where the position that is a predetermined distance ahead has a downward slope is illustrated. In this case, as shown in Fig. 14(a), at a position before the downward slope, a blind spot is generated in the downward direction with respect to the irradiation range of the electromagnetic waves. In this case, the control unit 204 transmits a control signal to the irradiator driving circuit 30, and the irradiator driving circuit 30 moves the irradiation range of the electromagnetic waves from the irradiator 10 downward according to the control signal. This makes it possible to eliminate the blind spot of the portion having a downward slope.

In Fig. 14(b), the case where the position that is the predetermined distance ahead has an upward slope is illustrated. In this case, as shown in Fig. 14(b), a blind spot is generated in the upward direction with respect to the irradiation range of the electromagnetic waves, at the position before the upward slope. In this case, the control unit 204 transmits a control signal to the irradiator driving circuit 30, and the irradiator driving circuit 30 moves the irradiation range of the electromagnetic waves from the irradiator 10 upward according to the control signal. This makes it possible to eliminate the blind spot of a portion having an upward slope.

Note that the control unit 204 can compute the movement width in the longitudinal direction according to the degree of the gradient of the position that is a predetermined distance ahead, by using a function with the degree of the gradient as a parameter. The control unit 204 can determine the movement width in the longitudinal direction according to the degree of the gradient of the position that is a predetermined distance ahead, by using a table that stores the degree of the gradient and the movement width in the longitudinal direction in association with each other.

Note that in the present embodiment, it is assumed that the scanning range is shifted (moved) in a direction perpendicular to the central axis C in Fig. 13 (the lateral direction in Fig. 13) as shown in Fig. 13 and the scanning range is shifted in the longitudinal direction as shown in Figs. 14. Both of these controls may be performed, or at least one of these controls may be performed.

### [Second Embodiment]

A measuring device 200 of a second embodiment is represented by, for example, Fig. 1, similar to the measuring device 200 of the first embodiment. The functions of the measuring device 200 of the second embodiment are the same as the functions of the measuring device 200 of the first embodiment, except for those described below.

In the present embodiment, the control unit 204 further acquires the speed information of the mobile body 240. Then, based on the moving speed of the mobile body 240, the control unit 204 performs switching between setting the scanning range of the measurement unit 202 using the information on the position that is a predetermined distance ahead of the mobile body 240 on the predicted course as described in the first embodiment and setting the scanning range of the measurement unit 202 using the a steering signal indicating the steering direction of the mobile body 240. The speed information of the mobile body 240 and the steering signal of the mobile body 240 can be acquired through the CAN communication network 242 or the like.

Specifically, the control unit 204 sets the scanning range of the measurement unit 202 using the steering signal, in a case where the speed in the speed information of the mobile body 240 is equal to or less than a first reference value. In a case where the speed of the speed information is equal to or higher than a second reference value, the control unit 204 sets the scanning range of the measurement unit 202 using the information on the position that is a predetermined distance ahead of the mobile body 240 on the predicted course. Here, the first reference value and the second reference value may be the same value or different values. In a case where the first reference value and the second reference value are different values, the first reference value is set to a value larger than the second reference value. Thus, in a case where the speed of the mobile body 240 is equal to or more than the second reference value and less than the first reference value, the scanning range of the measurement unit 202 can be set by using the information on the position that is a predetermined distance ahead of the mobile body 240 on the predicted course and the steering signal. Further, in this case, the control unit 204 can compute the movement width of the scanning range of the measurement unit 202, by averaging the movement width of the scanning range obtained based on the information on the position that is a predetermined distance ahead of the mobile body 240 on the predicted course and the movement width obtained based on the steering signal.

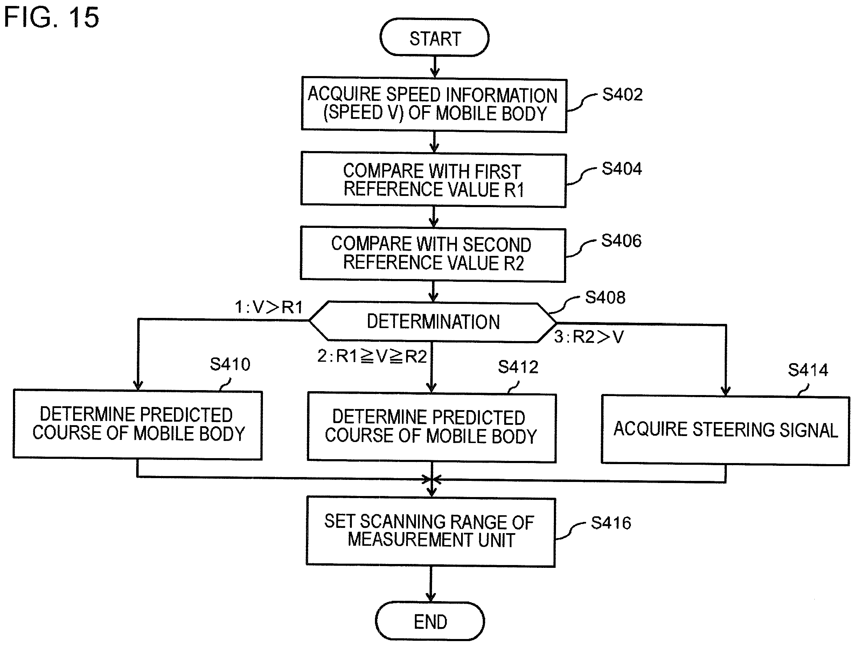

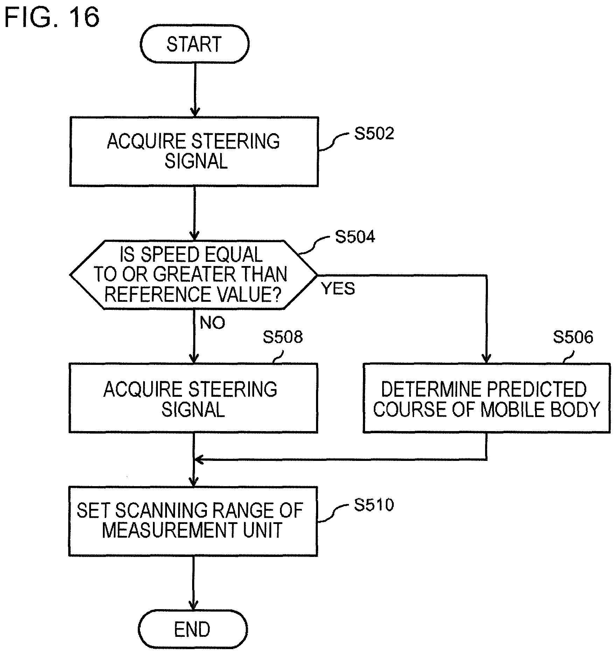

The operation of the measuring device 200 in the second embodiment will be described with reference to Figs. 15 and 16. Fig. 15 is a flowchart illustrating an example of a flow of a process performed by the measuring device 200 of the second embodiment. Fig. 16 is a flowchart illustrating another example of the flow of the process performed by the measuring device 200 of the second embodiment.

First, the process in the flowchart of Fig. 15 will be described. The flowchart of Fig. 15 illustrates the flow of the process in the case where the first reference value and the second reference value are different from each other.

The control unit 204 acquires the speed information (speed V) of the mobile body 240 through the CAN communication network 242 or the like (S402) . The control unit 204 compares the speed V indicated by the speed information acquired in S402 with the first reference value R1 related to the speed of the mobile body 240 (S404). Note that the first reference value R1 is a reference value for determining whether or not to use the steering signal when setting the scanning range of the measurement unit 202, and is defined, for example, in a program module for implementing the function of the control unit 204. Further, the control unit 204 compares the speed V indicated by the speed information acquired in S402 with the second reference value R2 related to the speed of the mobile body 240 (S406). Note that the second reference value is a reference value for determining whether or not to use the information indicating the predicted course of the mobile body 240 when setting the scanning range of the measurement unit 202, and is defined, for example, in a program module for implementing the function of the control unit 204. Further, in this example, the first reference value R1 is a value larger than the second reference value R2.

The control unit 204 determines the information to be used for setting the scanning range of the measurement unit 202, using the comparison result of the speed V and the first reference value R1 in S402 and the comparison result of the speed V and the second reference value R2 in S406 (S408) . Here, as described above, in the present example, the relationship of the first reference value R1 > the second reference value R2 is premised. Therefore, the relationship between the speed V, the first reference value R1, and the second reference value R2 is one of three patterns: (1) speed V > first reference value R1 (> second reference value R2), (2) first reference value R1 ≥ Speed V ≥ second reference value R2, and (3) (first reference value R1>) second reference value R2 > speed V.

In a case where the relationship of the above-described pattern (1) is satisfied (S408-1), the speed V of the mobile body 240 is higher than the first reference value R1, and the condition of using the steering signal is not satisfied. In addition, the speed V of the mobile body 240 is equal to or higher than the second reference value R2, and the condition of using the information indicating the predicted course of the mobile body 240 is satisfied. Therefore, in this case, the control unit 204 determines the predicted course of the mobile body 240 (S410). Then, the control unit 204 sets the scanning range of the measurement unit 202, based on the predicted course of the mobile body 240 (S416). Specifically, as described in each specific example of the first embodiment, the control unit 204 determines the predicted course of the mobile body 240 and determines the movement width of the scanning range of the measurement unit 202.

In a case where the relationship of the above-described pattern (2) is satisfied (S408-2), the speed V of the mobile body 240 is the first reference value R1 or less, and the condition of using the steering signal is satisfied. In addition, the speed V of the mobile body 240 is equal to or higher than the second reference value R2, and the condition of using the information indicating the predicted course of the mobile body 240 is satisfied. Therefore, in this case, the control unit 204 determines the predicted course of the mobile body 240, and acquires the steering signal of the mobile body 240 (S412). Then, the control unit 204 sets the scanning range of the measurement unit 202, based on the predicted course and the steering signal of the mobile body 240 (S416). In this case, for example, the control unit 204 can compute the average value of the movement width of the scanning range obtained based on the predicted course of the mobile body 240 and the movement width of the scanning range obtained based on the steering signal, and can move the scanning range of the measurement unit 202 according to the computed average value.

In a case where the relationship of the above-described pattern (3) is satisfied (S408-3), the speed V of the mobile body 240 is the first reference value R1 or less, and the condition of using the steering signal is satisfied. In addition, the speed V of the mobile body 240 is less than the second reference value R2, and the condition of using the information indicating the predicted course of the mobile body 240 is not satisfied. Therefore, in this case, the control unit 204 acquires a steering signal indicating the steering direction of the mobile body 240 through the CAN communication network 242 (S414) . Then, the control unit 204 sets the scanning range of the measurement unit 202, based on the steering signal (S416). For example, in a case where a steering signal that directs the traveling direction of the mobile body 240 to the right is acquired, the control unit 204 moves the scanning range 224 to the right side from the center axis of the mobile body 240, as illustrated in Fig. 9.

Next, the process in the flowchart of Fig. 16 will be described. The flowchart of Fig. 16 illustrates the flow of the process in the case where the first reference value and the second reference value are the same value. In this case, the first reference value and the second reference value can be interpreted as one reference value.

The control unit 204 acquires the speed information of the mobile body 240 through the CAN communication network 242 or the like (S502) . Then, the control unit 204 determines whether or not the speed indicated by the speed information acquired in S502 is equal to or greater than the reference value (S504). Note that the reference value is defined, for example, in a program module for implementing the function of the control unit 204.

In a case where the speed indicated by the speed information acquired in S502 is equal to or greater than the reference value (S504: YES), the control unit 204 determines the predicted course of the mobile body 240 (S506) . Then, the control unit 204 sets the scanning range of the measurement unit 202, based on the predicted course of the mobile body 240 (S510). Specifically, as described in each specific example of the first embodiment, the control unit 204 determines the predicted course of the mobile body 240 and determines the movement width of the scanning range of the measurement unit 202.

In a case where the speed indicated by the speed information acquired in S502 is less than the reference value (S504: NO), the control unit 204 acquires a steering signal indicating the steering direction of the mobile body 240 through the CAN communication network 242 (S508). Then, the control unit 204 sets the scanning range of the measurement unit 202, based on the steering signal (S510). For example, in a case where a steering signal that directs the traveling direction of the mobile body 240 to the right is acquired, the control unit 204 moves the scanning range 224 to the right side from the center axis of the mobile body 240, as illustrated in Fig. 9.

In the present embodiment, switching is performed between setting the scanning range of the measurement unit 202 using the steering signal according to the moving speed and setting the scanning range of the measurement unit 202 using the information of the position that is a predetermined distance ahead of the current position of the mobile body 240. Here, since the steering signal is obtained as a result of actually operating the steering unit of the mobile body 240, it can be said to be information indicating the direction of the mobile body 240 more accurately. If the speed of the mobile body 240 is slow to some extent, even when the scanning range of the measurement unit 202 is changed after receiving the steering signal, the changed scanning range of the measurement unit 202 is unlikely to deviate from the desired area. As described above, according to the present embodiment, it is possible to control the scanning range of the measurement unit 202 by a more appropriate method according to the speed of the mobile body 240.

Although the embodiments and examples have been described above with reference to the drawings, these are examples of the present invention, and various configurations other than the above can be adopted.

This application claims priority based on Japanese Patent Application No. 2016-170039 filed on August 31, 2016, and the disclosure of which is incorporated herein in its entirety.

## Claims

1. A control device comprising:
a control unit that controls a measurement unit which performs scanning by emitting electromagnetic waves and is disposed in a mobile body,
wherein the control unit sets a scanning range of the measurement unit, based on information indicating a current position of the mobile body and information indicating a predicted course of the mobile body.

2. The control device according to claim 1,
wherein the control unit sets the scanning range, based on information indicating a position that is a predetermined distance ahead of the current position of the mobile body on the predicted course.

3. The control device according to claim 2,
wherein the control unit determines the position that is the predetermined distance ahead, by using set route information set in advance as the predicted course of the mobile body and the current position of the mobile body.

4. The control device according to claim 2,
wherein the control unit determines the predicted course of the mobile body and the position that is the predetermined distance ahead, by using map data, and the current position and a moving direction of the mobile body.

5. The control device according to any one of claims 2 to 4,
wherein the control unit acquires speed information of the mobile body, and sets the predetermined distance using the speed information.

6. The control device according to any one of claims 2 to 5,
wherein the control unit
acquires speed information of the mobile body, and
performs switching between setting the scanning range by using the information of the position that is the predetermined distance ahead and setting the scanning range by using a steering signal indicating a steering direction of the mobile body, based on the speed information.

7. The control device according to claim 6,
wherein the control unit
sets the scanning range, using the steering signal, in a case where speed of the speed information is equal to or less than a first reference value, and
sets the scanning range, using information on the position that is the predetermined distance ahead, in a case where speed of the speed information is equal to or greater than a second reference value.

8. A measuring device which is disposed in a mobile body, comprising:
a measurement unit that performs scanning by emitting electromagnetic waves; and
a control unit that controls the measurement unit,
wherein the control unit sets a scanning range of the measurement unit, based on information indicating a current position of the mobile body and information indicating a predicted course of the mobile body.

9. A method of controlling, by a computer, a measuring device which scans an object by emitting electromagnetic waves and is disposed in a mobile body, the method comprising:
setting a scanning range of the measuring device, based on information indicating a current position of the mobile body and information indicating a predicted course of the mobile body.

10. A program causing a computer to execute the control method according to claim 9.
